# EUROPEAN PATENT APPLICATION

(11) **EP 2 975 493 A1**
(43) Date of publication of application: **20.01.2016**
(21) Application number: 15172333.5
(22) Date of filing: 16.06.2015
(51) Int. Cl.: G06F 3/01, H04M 1/725, G06F 3/0346

(54) **ANGLE-BASED ITEM DETERMINATION METHODS AND SYSTEMS**

(30) Priority: 08.07.2014 TW 103123406
(71) Applicant: Noodoe Corporation, Taipei City 115 (TW)
(72) Inventor: WANG, John C., 115 Taipei City (TW); YANG, Chieh, 115 Taipei City (TW)
(74) Representative: Karakatsanis, Georgios

(57) **Abstract**

Angle-based item determination methods and systems are provided. First, the orientation of an electronic device (300) is detected via at least one sensor (110). An included angle between a specific axis of the electronic device (300) and a specific direction is obtained. Then, one of a plurality of items is determined according to the included angle.

## Description

### BACKGROUND

### Technical Field

The disclosure relates generally to item determination methods and systems, and, more particularly to angle-based item determination methods and systems.

### Description of the Related Art

Recently, electronic devices, such as smart phones, notebooks, wearable devices, or other portable devices, have become more and more technically advanced and multifunctional. For example, portable devices have network connectivity capabilities. Users can use their portable devices to connect to networks at anytime and anywhere. The convenience and new functionalities advanced by modern technology have made these devices into necessities of life.

Generally, various user interfaces can be provided in a portable device for operating corresponding functions and applications in that device. Typically, a portable device can have at least one input tool, such as a physical button or a touch-sensitive screen. Users can use their fingers to input commands to the device via the physical button or the touch-sensitive screen to operate the user interfaces.

The technology of operating devices in a touch manner has indeed changed the human behavior of operating electronic devices, and has brought forward remarkable benefits. However, for some users, touch input still has a lot of drawbacks and limitations. For example, an electronic device may execute unexpected processes due to unintentional touches by a user who either does not know the operations of the electronic device or lacks the dexterity to avoid mistouches. As time passes, with more mistouches occurring, the aspiration of using these devices will be reduced. Another aspect in which touch devices fall short deals with safety. In particular for drivers, it is inconvenient and dangerous to operate an electronic device via a touch manner while driving. Consequently, providing more intuitive and convenient user interfaces and related operational methods is an important topic for the industry to solve. New, safer, more intuitive and convenient user interfaces are also highly sought after by most users.

### SUMMARY

Angle-based item determination methods and systems are provided, wherein at least one item in a user interface can be determined according to an included angle between a specific axis of the electronic device and a specific direction.

In an embodiment of an angle-based item determination methods, the orientation of an electronic device is detected via at least one sensor. An included angle between a specific axis of the electronic device and a specific direction is obtained. Then, one of a plurality of items is determined according to the included angle.

An embodiment of an angle-based item determination system comprises a storage unit, at least one sensor, and a processing unit. The storage unit comprises a plurality of items. The sensor detects the orientation of an electronic device. The processing unit obtains an included angle between a specific axis of the electronic device and a specific direction, and determines one of the items according to the included angle.

In an embodiment of an angle-based item determination methods, the orientation of an electronic device is detected via at least one sensor. A first included angle between a specific axis of the electronic device and a specific direction at a first time point is obtained, and a second included angle between the specific axis of the electronic device and the specific direction at a second time point is obtained. An angle difference is calculated according to the first included angle and the second included angle. Then, one of a plurality of items is determined according to the angle difference.

An embodiment of an angle-based item determination system comprises a storage unit, at least one sensor, and a processing unit. The storage unit comprises a plurality of items. The sensor detects the orientation of an electronic device. The processing unit obtains a first included angle between a specific axis of the electronic device and a specific direction at a first time point, obtains a second included angle between the specific axis of the electronic device and the specific direction at a second time point, calculates an angle difference according to the first included angle and the second included angle, and determines one of the items according to the angle difference.

In some embodiments, an instruction is received, and in response to the instruction, the first included angle between the specific axis of the electronic device and the specific direction at the first time point is recorded. In some embodiments, it is determined whether the orientation of the electronic device matches with or substantially matches with a specific orientation, or whether a movement of the electronic device matches with a specific movement. When the orientation of the electronic device matches with or substantially matches with the specific orientation, or when the movement of the electronic device matches with the specific movement, the instruction is generated.

In some embodiments, the specific direction comprises a direction of gravity, and/or a geographical direction.

In some embodiments, the determined item is displayed in a user interface via a display unit.

In some embodiments, the determined item is activated in the electronic device.

In some embodiments, the items are arranged in a specific order, and the greater the angle difference, the item closer to last in the specific order is determined.

In some embodiments, the sensor comprises a compass, an accelerometer, and/or a Gyro sensor.

Angle-based item determination methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of an angle-based item determination system of the invention;
Fig. 2 is a flowchart of an embodiment of an angle-based item determination method of the invention;
Fig. 3 is a schematic diagram illustrating a specific axis of an electronic device of the invention;
Fig. 4 is a schematic diagram illustrating an included angle between the specific axis of an electronic device and a specific direction of the invention;
Fig. 5 is a flowchart of another embodiment of an angle-based item determination method of the invention;
Fig. 6 is a schematic diagram illustrating included angles between the specific axis of an electronic device and a specific direction at various time points of the invention;
Fig. 7 is a flowchart of another embodiment of an angle-based item determination method of the invention;
Fig. 8 is a flowchart of an embodiment of a method for generating an instruction of the invention;
Fig. 9 is a flowchart of another embodiment of a method for generating an instruction of the invention; and
Figs. 10 and 11 are schematic diagrams illustrating an example of angle-based item determination of the invention.

### DETAILED DESCRIPTION OF THE INVENTION

### Angle-based item determination methods and systems are provided.

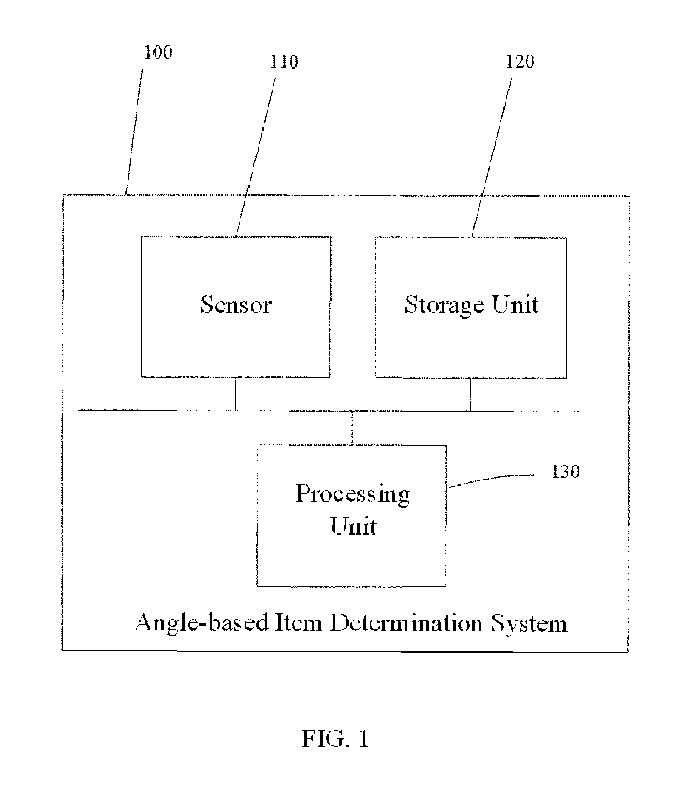

Fig. 1 is a schematic diagram illustrating an embodiment of an angle-based item determination system of the invention. As shown in Fig.1, the angle-based item determination system 100 can be used in an electronic device. In some embodiments, the electronic device may be a portable device, such as a mobile phone, a smart phone, a PDA (Personal Digital Assistant), a GPS (Global Positioning System), a notebook, a tablet computer, or a wearable device.

The angle-based item determination system 100 comprises at least one sensor 110, a storage unit 120, and a processing unit 130. The sensor 110 can detect the orientation of an electronic device. In some embodiments, the sensor 110 may be an accelerometer such as a G-sensor for generating information of velocity and displacement when the electronic device moves. In some embodiments, the sensor 110 may be a Gyro sensor for generating information of angular acceleration when the electronic device moves. In some embodiments, the sensor 110 may be a compass for detecting an angle between an electronic device and a geographical direction, such as direction of the North Pole or the South Pole. It is understood that, the above sensors are examples of the application, and the present invention is not limited thereto. Any sensor which can detect the orientation of an electronic device can be applied in the present invention. As described, the sensor 110 can detect the orientation of the electronic device. It is noted that, in some embodiments, the orientation comprises angle information corresponding to the electronic device in reference to at least one reference point. In some embodiments, the orientation can be represented as an included angle between an axis which is vertical to at least one plane of the electronic device and a specific direction, such as the direction of gravity or the geographical direction. The storage unit 120 can store related data, such as data output by the sensor 110, applications provided by the electronic device, and related user interfaces. It is noted that, the storage unit 120 comprises a plurality of items. In some embodiments, the items respectively correspond to different applications. In some embodiments, the items respectively correspond to different states or operational modes of an application. The processing unit 130 can control related operations of hardware and software in the electronic device, and perform the angle-based item determination methods of the invention, which will be discussed later. It is understood that, in some embodiments, the angle-based item determination system 100 can further comprise a display unit (not shown in Fig. 1) for displaying related information, such as images, interfaces, and/or related data.

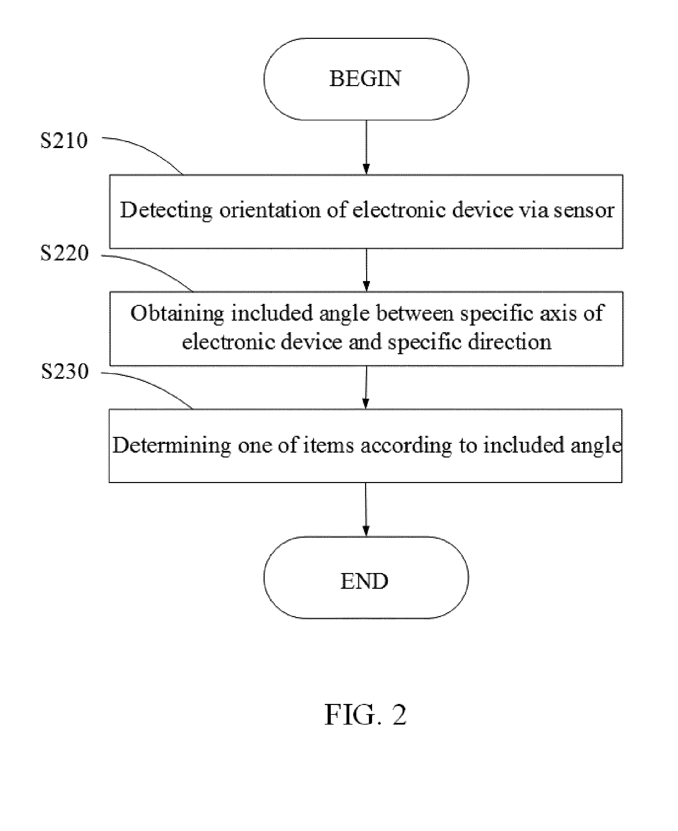

Fig. 2 is a flowchart of an embodiment of an angle-based item determination method of the invention. The angle-based item determination method of the invention can be used in an electronic device, such as a mobile phone, a smart phone, a PDA, a GPS, a notebook, a tablet computer, a wearable device, or other portable devices.

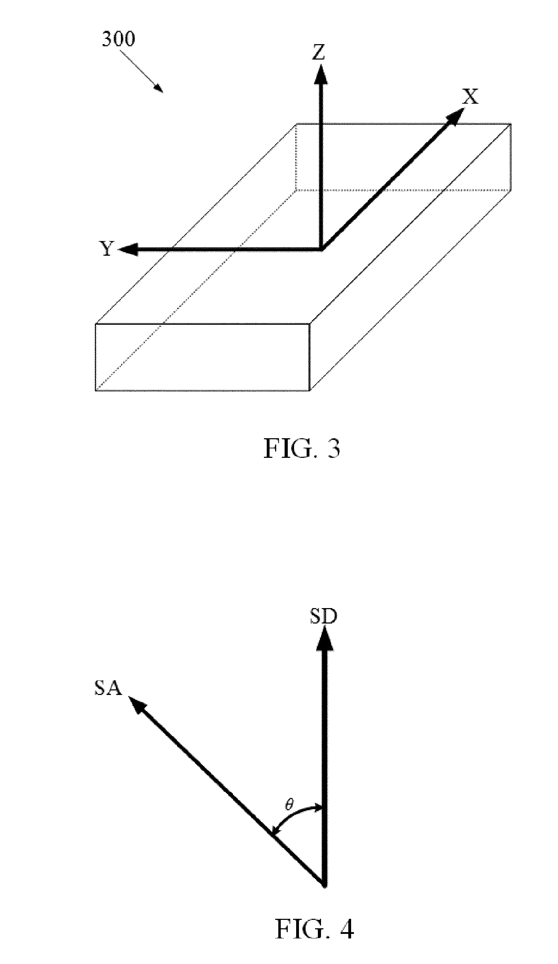

In step S210, the orientation of an electronic device is detected by at least one sensor. It is understood that, in some embodiments, the sensor may be an accelerometer for generating information of velocity and displacement when the electronic device moves. In some embodiments, the sensor may be a Gyro sensor for generating information of angular acceleration when the electronic device moves. In some embodiments, the sensor may be a compass for detecting an angle between an electronic device and a geographical direction, such as direction of the North Pole or the South Pole. It is noted that, the above sensors are examples of the application, and the present invention is not limited thereto. Any sensor which can detect the orientation of an electronic device can be applied in the present invention. In step S220, an included angle between a specific axis of the electronic device and a specific direction is obtained. It is noted that, as described, the specific axis of the electronic device can be vertical to at least one plane of the electronic device. It is understood that, in some embodiments, the specific direction may be the direction of gravity and/or the geographical direction, such as the North Pole or the South Pole. An included angle *θ* is obtained between the specific axis SA of the electronic device and the specific direction SD, as shown in Fig. 4. Then, in step S230, one of a plurality of items is determined according to the included angle.

It is noted that, in some embodiments, a specific table can be used to record the mapping relations between the included angle and the corresponding item. Table 1 shows an example of the mapping table.

**Table 1**

| Included Angle (degree) | Item | Included Angle (degree) | Item |
|---|---|---|---|
| | | | |
| 1∼45 | I1 | 271-315 | I7 |
| 46∼90 | I2 | 316-0 | I8 |
| 91∼135 | I3 | | |
| 136∼180 | I4 | | |
| 181∼225 | I5 | | |
| 226∼270 | I6 | | |

As shown in table 1, when the included angle between the specific axis of the electronic device and the specific direction is obtained, the table 1 can be looked up according to the included angle to identify the corresponding item. In the example, the determined item is I1 when the included angle is between 1-45 degrees, the determined item is I2 when the included angle is between 46-90 degrees, the determined item is I3 when the included angle is between 91-135 degrees, the determined item is I4 when the included angle is between 136-180 degrees, the determined item is I5 when the included angle is between 181-225 degrees, the determined item is I6 when the included angle is between 226-270 degrees, the determined item is I7 when the included angle is between 271-315 degrees, and the determined item is I8 when the included angle is between 316-0 degrees. It is noted that, the above table is an example of the application, and the present invention is not limited thereto.

It is understood that, in some embodiments, the determined item can be displayed in a user interface in a display unit of the electronic device. In some embodiments, when the determined item is not changed for a predefined interval, such as 2 seconds, the determined item is automatically activated. In some embodiments, when an item is determined, a specific instruction can be received by the electronic device. In response to the specific instruction, the determined item is activated. It is noted that, the specific instruction can be input in any manner. For example, the specific instruction can be input to the electronic device via a sound reception unit, a touch-sensitive screen, a sensor, an IR detector, and/or a physical button on the electronic device.

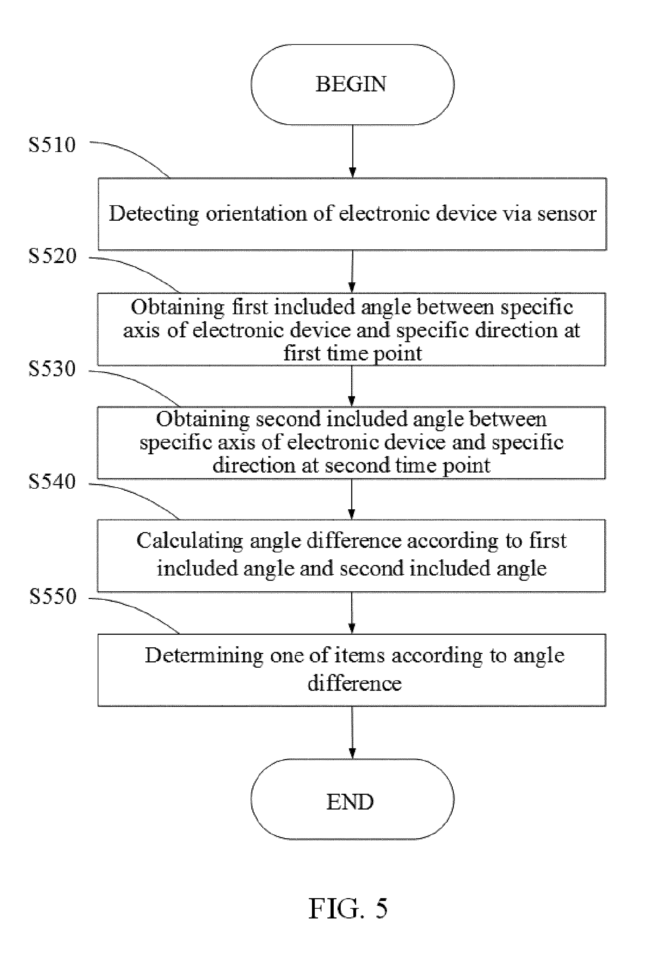

Fig. 5 is a flowchart of another embodiment of an angle-based item determination method of the invention. The angle-based item determination method of the invention can be used in an electronic device, such as a mobile phone, a smart phone, a PDA, a GPS, a notebook, a tablet computer, a wearable device, or other portable devices.

In step S510, the orientation of an electronic device is detected by at least one sensor. Similarly, in some embodiments, the sensor may be an accelerometer for generating information of velocity and displacement when the electronic device moves. In some embodiments, the sensor may be a Gyro sensor for generating information of angular acceleration when the electronic device moves. In some embodiments, the sensor may be a compass for detecting an angle between an electronic device and a geographical direction, such as direction of the North Pole or the South Pole. It is noted that, the above sensors are examples of the application, and the present invention is not limited thereto. Any sensor which can detect the orientation of an electronic device can be applied in the present invention. In step S520, a first included angle between a specific axis of the electronic device and a specific direction at a first time point is obtained. Similarly, the specific axis of the electronic device can be vertical to at least one plane of the electronic device. It is understood that, in some embodiments, the specific direction may be the direction of gravity and/or the geographical direction, such as the North Pole or the South Pole. In step S530, a second included angle between the specific axis of the electronic device and the specific direction at a second time point is obtained. Then, in step S540, an angle difference is calculated according to the first included angle and the second included angle, and in step S550, one of a plurality of items is determined according to the angle difference.

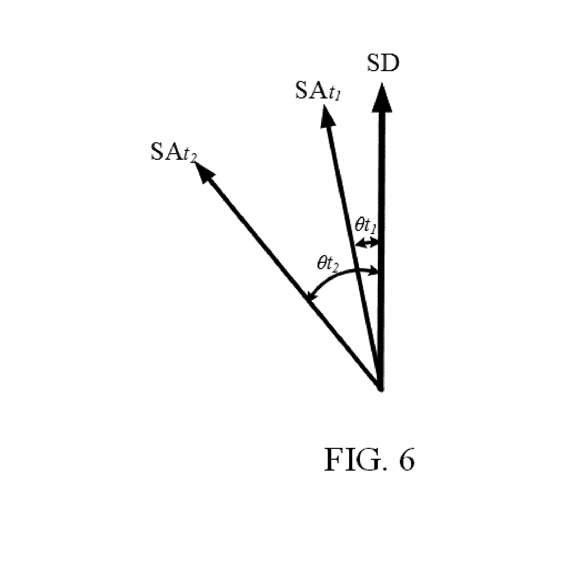

Fig. 6 is a schematic diagram illustrating included angles between the specific axis of an electronic device and a specific direction at various time points of the invention. As shown in Fig. 6, the first included angle *θt₁* exists between the specific axis SAt₁ of the electronic device and the specific direction SD at the first time point, and the second included angle *θt₂* exists between the specific axis SAt₂ of the electronic device and the specific direction SD at the second time point. The angle difference can be calculated according to the first included angle *θt₁* and the second included angle *θt₂,* and one of a plurality of items is determined accordingly. It is understood that, in some embodiments, the items are arranged in a specific order, and the greater the angle difference, the item closer to last in the specific order is determined.

It is noted that, in some embodiments, a specific table can be used to record the mapping relations between the angle difference and the corresponding item. Table 2 shows an example of the mapping table.

**Table 2**

| Angle Difference (degree) | Item |
|---|---|
| 0∼15 | I1 |
| 16∼30 | I2 |
| 31∼45 | I3 |
| 46∼60 | I4 |
| 61∼75 | I5 |
| 76∼ | I6 |

As shown in table 2, when the first included angle at the first time point and the second included angle at the second time point are obtained, and the angle difference is calculated accordingly, the table 2 can be looked up according to the angle difference to know the corresponding item. In the example, the determined item is I1 when the angle difference falls into 0-15 degrees, the determined item is I2 when the angle difference falls into 16-30 degrees, the determined item is I3 when the angle difference falls into 31-45 degrees, the determined item is I4 when the angle difference falls into 46-60 degrees, the determined item is I5 when the angle difference falls into 61-75 degrees, the determined item is I6 when the angle difference is greater than 76 degrees. It is noted that, the above table is an example of the application, and the present invention is not limited thereto.

Similarly, in some embodiments, the determined item can be displayed in a user interface in a display unit of the electronic device. In some embodiments, when the determined item is not changed for a predefined interval, such as 2 seconds, the determined item is automatically activated. In some embodiments, when an item is determined, a specific instruction can be received by the electronic device. In response to the specific instruction, the determined item is activated. It is noted that, the specific instruction can be input in any manner.

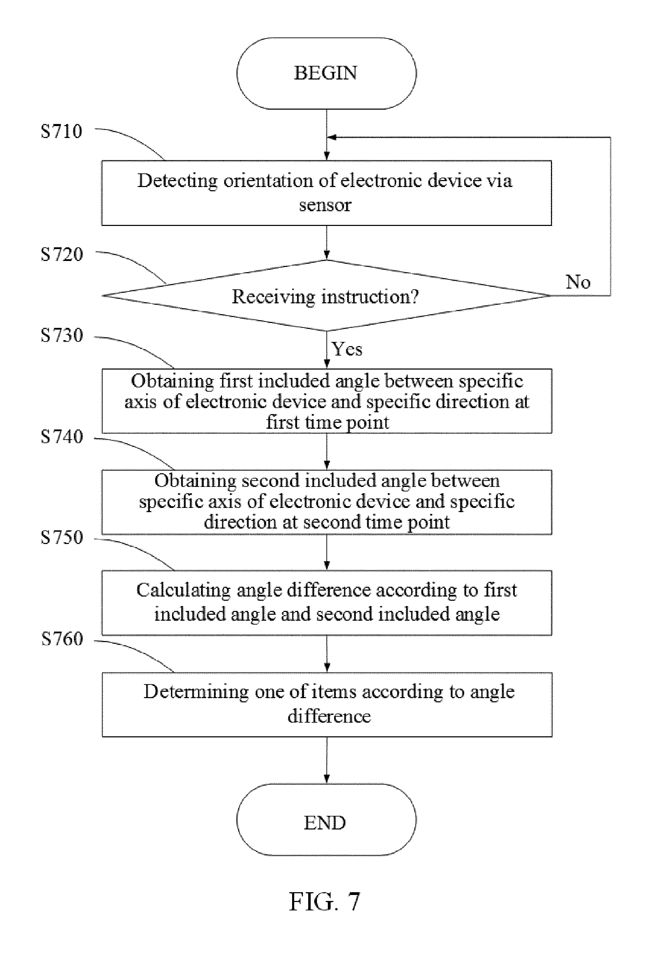

Fig. 7 is a flowchart of another embodiment of an angle-based item determination method of the invention. The angle-based item determination method of the invention can be used in an electronic device, such as a mobile phone, a smart phone, a PDA, a GPS, a notebook, a tablet computer, a wearable device, or other portable devices.

In step S710, the orientation of an electronic device is detected by at least one sensor. It is understood that, in some embodiments, the sensor may be an accelerometer for generating information of velocity and displacement when the electronic device moves. In some embodiments, the sensor may be a Gyro sensor for generating information of angular acceleration when the electronic device moves. In some embodiments, the sensor may be a compass for detecting an angle between an electronic device and a geographical direction, such as direction of the North Pole or the South Pole. It is noted that, the above sensors are examples of the application, and the present invention is not limited thereto. Any sensor which can detect the orientation of an electronic device can be applied in the present invention. In step S720, it is determined whether an instruction is received. It is noted that, the instruction can be defined in the electronic device. It is understood that, in some embodiments, the received instruction comprises an orientation, a movement, a tap, a sound, a trigger corresponding to a button, an appearance corresponding to an object, and/or a contact on a touch-sensitive device. It is noted that, the above received instructions are examples of the application, and the present invention is not limited thereto. When the instruction is not received (No in step S720), the procedure returns to step S710. When the instruction is received (Yes in step S720), in step S730, a first included angle between a specific axis of the electronic device and a specific direction at a first time point is obtained. Similarly, the specific axis of the electronic device can be vertical to at least one plane of the electronic device. It is understood that, in some embodiments, the specific direction may be the direction of gravity and/or the geographical direction, such as the North Pole or the South Pole. In step S740, a second included angle between the specific axis of the electronic device and the specific direction at a second time point is obtained. It is noted that, after the instruction is received (the first time point), the electronic device can be moved, and the second included angle corresponding to the moved electronic device can be obtained at the second time point. Then, in step S750, an angle difference is calculated according to the first included angle and the second included angle, and in step S760, one of a plurality of items is determined according to the angle difference. Similarly, in some embodiments, the items are arranged in a specific order, and the greater the angle difference, the item closer to last in the specific order is determined. In some embodiments, a specific table can be used to record the mapping relations between the angle difference and the corresponding item. After the angle difference is obtained, the table can be looked up according to the angle difference to identify the corresponding item.

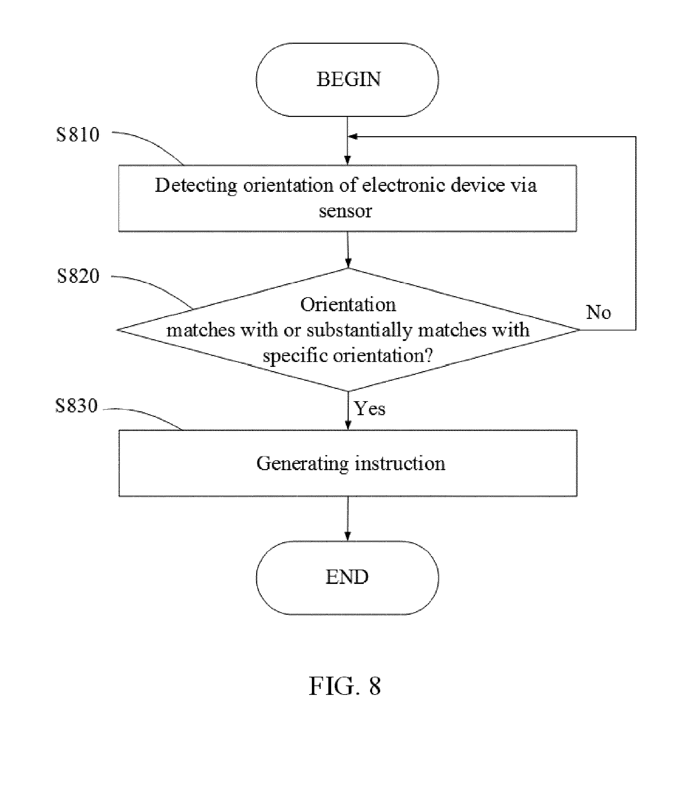

Fig. 8 is a flowchart of an embodiment of a method for generating an instruction of the invention. In step S810, the orientation of the electronic device is detected by at least one sensor. In step S820, it is determined whether the orientation of the electronic device matches with or substantially matches with a specific orientation. It is understood that, in some embodiments, the specific orientation may be the last orientation of an electronic device, in which the electronic device is worn on the arm of a user, and is lifted up to a visible area in front of the chest of the user. When the orientation of the electronic device does not match with the specific orientation (No in step S820), the procedure returns to step S810. When the orientation of the electronic device matches with or substantially matches with the specific orientation (Yes in step S820), in step S830, the instruction is generated in the electronic device. It is noted that, the instruction triggers the electronic device to obtain the included angle between the specific axis of the electronic device and the specific direction at the first time point.

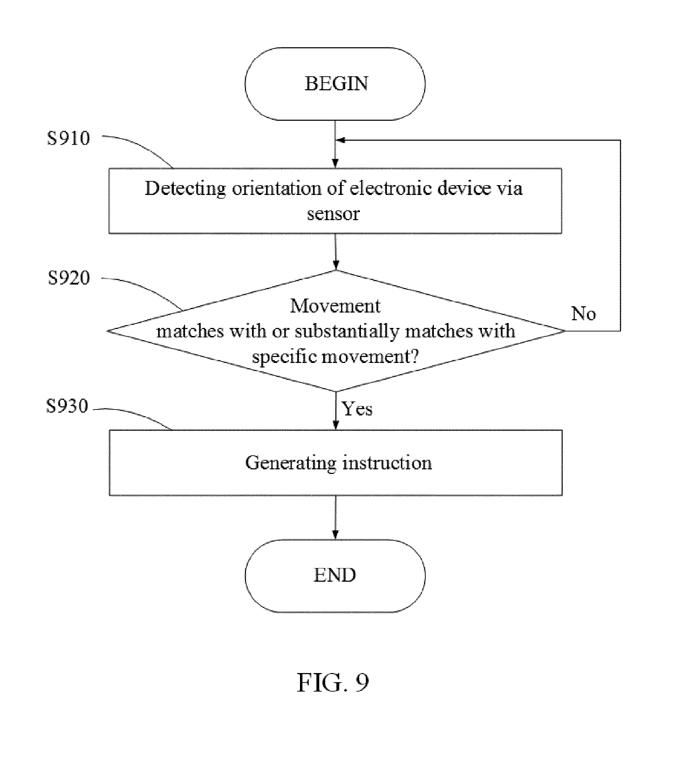

Fig. 9 is a flowchart of another embodiment of a method for generating an instruction of the invention. In step S910, the movement of the electronic device is detected by at least one sensor. In step S920, it is determined whether the movement of the electronic device matches with or substantially matches with a specific movement. It is understood that, in some embodiments, the specific movement may be a motion representing that an electronic device worn on the arm of a user is lifted up to a visible area in front of the chest of the user. It is noted that, in some embodiments, the variation of data, such as displacement, velocity, and/or angular acceleration detected by the sensor in a predefined interval can be recorded. In some embodiments, the determination of whether the electronic device generates a specific movement can be performed by determining whether the variation of data corresponding to the electronic device in the predefined interval matches with a predefined variation corresponding to the specific movement. When the variation of data corresponding to the electronic device in the predefined interval matches with the predefined variation, it is determined that the electronic device generates the specific movement. When the movement of the electronic device does not match with the specific movement (No in step S920), the procedure returns to step S910. When the movement of the electronic device matches with or substantially matches with the specific movement (Yes in step S920), in step S930, the instruction is generated in the electronic device. Similarly, the instruction triggers the electronic device to obtain the included angle between the specific axis of the electronic device and the specific direction at the first time point.

It is noted again, as described, the received specific instruction can comprise an orientation, a movement, a sound, a trigger corresponding to a button, an appearance corresponding to an object, and/or a contact on a touch-sensitive device. The manners for generating the instruction are examples of the application, and the present invention is not limited thereto.

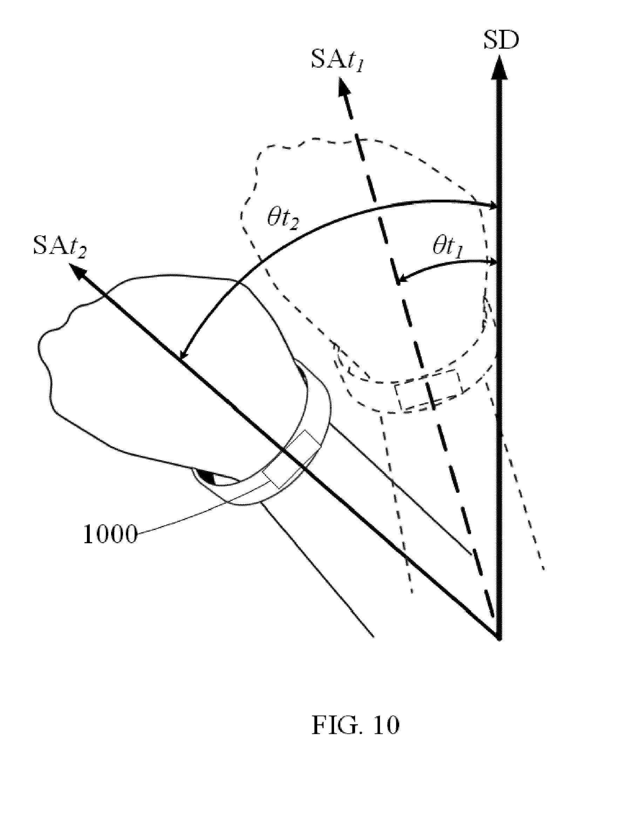

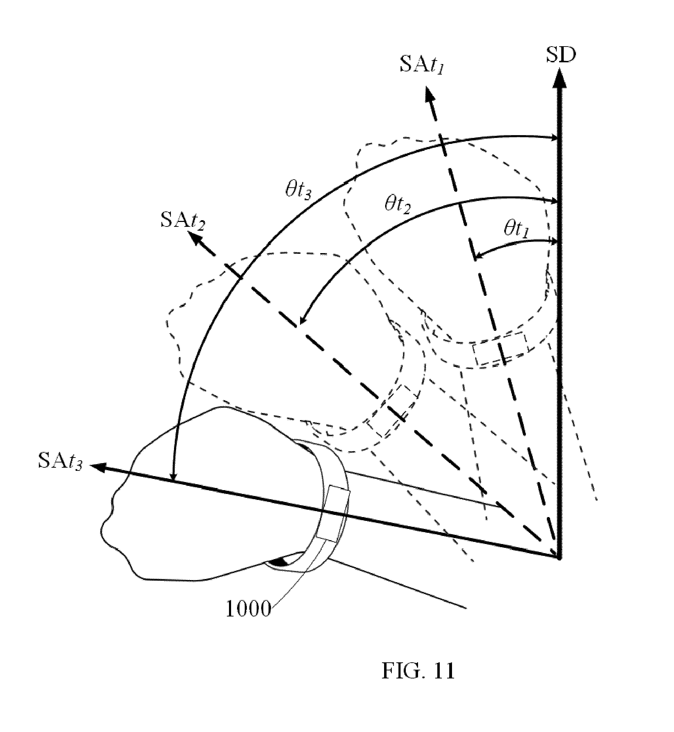

Figs. 10 and 11 are schematic diagrams illustrating an example of angle-based item determination of the invention. In the example, the specific direction is a geographical direction, such as the direction of the North Pole. A wearable electronic device 1000 can be worn on a wrist of a user, as shown in Fig. 10. In the example, the specific axis of the wearable electronic device 1000 can be the Y axis of the electronic device 300 shown in Fig. 3. At the first time point *t₁,* the wearable electronic device 1000 can receive an instruction, and an included angle *θt₁* between the specific axis *SAt₁* of the electronic device and the specific direction SD is recorded. The included angle *θt₁* is set as a reference point. It is noted that, the information of the included angle between the specific axis of the electronic device and the specific direction can be obtained from the compass of the wearable electronic device 1000. Then, the user can move the wrist, causing the wearable electronic device 1000 to be moved. At the second time point *t₂,* an included angle *θt₂* between the specific axis *SAt₂* of the electronic device and the specific direction SD is recorded. The angle difference *(θt₂*-*θt₁)* can be calculated according to the included angle *θt₁* and the included angle *θt₂,* and a first item is determined from a plurality of items according to the angle difference. The first item can be displayed in the display unit of the wearable electronic device 1000. The user can further move the wrist, causing the wearable electronic device 1000 to be moved again, as shown in Fig. 11. At the third time point *t₃,* an included angle *θt₃* between the specific axis *SAt₃* of the electronic device and the specific direction SD is recorded. The angle difference (*θt₃-θt₁*) can be calculated according to the included angle *θt₁* and the included angle *θt₃,* and a second item is determined from a plurality of items according to the angle difference. The second item can be displayed in the display unit of the wearable electronic device 1000.

Therefore, the angle-based item determination methods and systems of the present invention can determine at least one item in a user interface according to the included angle between a specific axis of the electronic device and a specific direction, thereby providing more intuitive, convenient, and efficient user interfaces and the corresponding operational methods.

Angle-based item determination methods may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. An angle-based item determination method for use in an electronic device (300), comprising:
detecting the orientation of the electronic device (300) via at least one sensor (110);
obtaining a first included angle between a specific axis of the electronic device (300) and a specific direction at a first time point;
obtaining a second included angle between the specific axis of the electronic device (300) and the specific direction at a second time point;
calculating an angle difference according to the first included angle and the second included angle; and
determining one of a plurality of items according to the angle difference.

2. The method of claim 1, further comprising receiving an instruction, and in response to the instruction, the first included angle between the specific axis of the electronic device (300) and the specific direction at the first time point is recorded.

3. The method of claim 2, further comprising:
determining whether the orientation of the electronic device (300) matches with or substantially matches with a specific orientation, or whether a movement of the electronic device (300) matches with or substantially matches with a specific movement; and
generating the instruction when the orientation of the electronic device (300) matches with or substantially matches with the specific orientation, or when the movement of the electronic device (300) matches with or substantially matches with the specific movement.

4. The method of claim 1, 2 or 3, wherein the specific direction comprises a direction of gravity, or a geographical direction.

5. The method of claim 1, 2, 3 or 4, further comprising displaying the determined item in a user interface via a display unit.

6. The method of claim 1, 2, 3, 4 or 5, further comprising activating the determined item in the electronic device (300).

7. The method of claim 1, 2, 3, 4, 5 or 6, wherein the items are arranged in a specific order, and the greater the angle difference, the item closer to last in the specific order is determined.

8. The method of claim 1, 2, 3, 4, 5, 6 or 7, wherein the at least one sensor (110) comprises a compass, an accelerometer, or a Gyro sensor.

9. An angle-based item determination system for use in an electronic device (300), comprising:
at least one sensor (110) detecting the orientation of the electronic device;
a storage unit (120) comprising a plurality of items; and
a processing unit (130) obtaining a first included angle between a specific axis of the electronic device (300) and a specific direction at a first time point, obtaining a second included angle between the specific axis of the electronic device (300) and the specific direction at a second time point, calculating an angle difference according to the first included angle and the second included angle, and determining one of a plurality of items according to the angle difference.

10. A machine-readable storage medium comprising a computer program, which, when executed, causes a device to perform an angle-based item determination method for use in an electronic device (300), wherein the method comprises:
detecting the orientation of the electronic device (300) via at least one sensor (110);
obtaining a first included angle between a specific axis of the electronic device (300) and a specific direction at a first time point;
obtaining a second included angle between the specific axis of the electronic device (300) and the specific direction at a second time point;
calculating an angle difference according to the first included angle and the second included angle; and
determining one of a plurality of items according to the angle difference.

11. An angle-based item determination method for use in an electronic device (300), comprising:
detecting the orientation of the electronic device via at least one sensor (110);
obtaining an included angle between a specific axis of the electronic device (300) and a specific direction; and
determining one of a plurality of items according to the included angle.

12. An angle-based item determination system for use in an electronic device (300), comprising:
at least one sensor (110) detecting the orientation of the electronic device;
a storage unit (120) comprising a plurality of items; and
a processing unit (130) obtaining an included angle between a specific axis of the electronic device (300) and a specific direction, and determining one of the items according to the included angle.

13. A machine-readable storage medium comprising a computer program, which, when executed, causes a device to perform an angle-based item determination method for use in an electronic device (300), wherein the method comprises:
detecting the orientation of the electronic device (300) via at least one sensor (110);
obtaining an included angle between a specific axis of the electronic device (300) and a specific direction is obtained; and
determining one of a plurality of items according to the included angle
